Europäisches Patentamt

European Patent Office

Office européen des brevets

(19)

(11) Numéro de publication : **0 146 471**
**B1**

(12) **FASCICULE DE BREVET EUROPÉEN**

(45) Date de publication du fascicule du brevet :
17.05.89

(51) Int. Cl.⁴ : $G\ 02\ B\ \ 6/38$

(21) Numéro de dépôt : 84402554.4

(22) Date de dépôt : 11.12.84

(54) Dispositif de connexion semi-permanent pour fibres optiques, et procédé pour sa mise en oeuvre.

(30) Priorité : 16.12.83 FR 8320197

(43) Date de publication de la demande :
26.06.85 Bulletin 85/26

(45) Mention de la délivrance du brevet :
17.05.89 Bulletin 89/20

(84) Etats contractants désignés :
DE GB IT SE

(56) Documents cités :
EP—A— 0 090 724
DE—A— 2 518 319
DE—A— 2 524 644
PATENTS ABSTRACTS OF JAPAN, vol. 3, no. 159 (E-162), 27 décembre 1979, page 80 E 162 & JP - A - 54 139 565
PATENTS ABSTRACTS OF JAPAN, vol. 3, no. 135 (E-150), 10 novembre 1979, page 129 E 150 & JP - A - 54 113 348
PATENTS ABSTRACTS OF JAPAN, vol. 1, no. 35, 15 avril 1977, page 1996 E 76 & JP - A - 51 133 042

(73) Titulaire : SOCAPEX
10 bis, quai Léon Blum
F-92153 Suresnes (FR)

(72) Inventeur : Soster, Marie-Claude
THOMSON-CSF SCPI 173, bld Haussmann
F-75379 Paris Cedex 08 (FR)
Inventeur : Lecomte, Joel
THOMSON-CSF SCPI 173, bld Haussmann
F-75379 Paris Cedex 08 (FR)

(74) Mandataire : Hasenrader, Hubert et al
Cabinet BEAU DE LOMENIE 55, rue d'Amsterdam
F-75008 Paris (FR)

## Description

La présente invention a pour objet un dispositif de connexion semi-permanent pour fibres optiques, destiné à raccorder bout à bout deux n fibres optiques avec n entier, supérieur ou égal à 1, ainsi qu'un procédé pour sa mise en œuvre.

Dans la demande EP-A-0090724, la Demanderesse a décrit un dispositif de raccordement semi-permanent de fibres optiques dans lequel les fibres optiques sont maintenues en place par une bride de maintien assurant une fonction de réalignement et exerçant sur celle-ci une force élastique transversale d'intensité donnée.

Des dispositifs d'un type analogue ont été proposés dans les publications DE-A-2 518 319 et DE-A-2 524 644.

La présente invention propose des perfectionnements aux dispositifs connus visant à faciliter la manipulation et la mise en place des fibres optiques dans le dispositif de connexion.

Le dispositif de connexion semi-permanent selon l'invention est du type destiné à raccorder bout à bout deux n fibres optiques, avec n entier, supérieur ou égal à 1, et comportant un support présentant un rainurage en forme de V destiné à recevoir les extrémités desdites fibres optiques et formé de trois parties, à savoir, une partie centrale recevant une bride d'alignement pour maintenir élastiquement les extrémités des fibres dénudées et accolées bout à bout, et deux parties d'extrémité recevant chacune une bride de rétention, destinée à maintenir en position les fibres dans une région où elles ne sont pas dénudées ; des moyens de serrage étant prévus pour la bride d'alignement et les brides de rétention, lesdits moyens présentant, en ce qui concerne la bride d'alignement et au moins une bride de rétention, deux positions de serrage, la première permettant le coulissement d'au moins une fibre optique le long du rainurage en forme de V et la seconde assurant son blocage en position.

Il est caractérisé en ce que lesdits moyens de serrage comprennent des clips dont une extrémité est logée dans une partie dudit support opposée à celle présentant ledit rainurage et dont l'extrémité opposée est susceptible de venir se loger dans l'une des deux rainures ménagées sur un côté d'une dite bride opposé à celui adjacent audit rainurage, et correspondant respectivement à chacune des deux dites positions.

L'invention sera mieux comprise à la·lecture de la description qui va suivre, donnée à titre d'exemple non limitatif, en liaison avec les dessins qui représentent :

les figures 1a et 1b, en perspective et une coupe avec arrachement partiel d'une première variante du dispositif selon l'invention ;

les figures 2a et 2b, une vue debout d'une deuxième et d'une troisième variante du dispositif selon l'invention ;

les figures 3a et 3b, respectivement une coupe transversale et une vue de dessus avec coupe longitudinale partielle d'une quatrième variante du dispositif selon l'invention ;

les figures 4a et 4e, respectivement en vue de dessus et en coupe longitudinale, un corps de connecteur selon les figures 1a et 1b, et les coupes EE, DD et FF de la figure 4b ;

les figures 5a et 5c, respectivement en vue de dessus en coupe longitudinale et en coupe transversale, une bride élastique suivant un mode de réalisation de l'invention ;

les figures 6a et 6b, respectivement en coupe transversale et en vue latérale, une bride de rétention suivant l'invention ;

la figure 7, en vue latérale un clip constituant un moyen de maintien selon l'invention ;

les figures 8a et 8b, en coupe transversale, illustrent les différents positionnements possible du clip de la figure 7 de manière à obtenir le serrage respectivement d'une bride élastique et d'une bride de rétention ;

la figure 9, un mode de réalisation du montage du dispositif selon l'invention sur une platine de raccordement ;

les figures 10a et 10b respectivement en coupe longitudinale et transversale, un autre mode de réalisation du montage du dispositif selon l'invention sur une platine de raccordement.

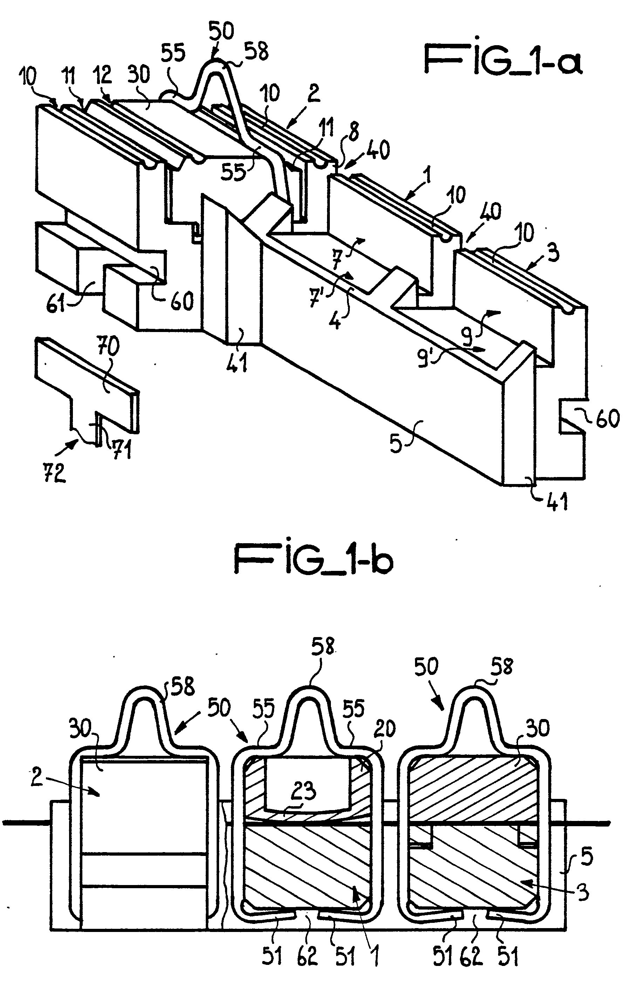

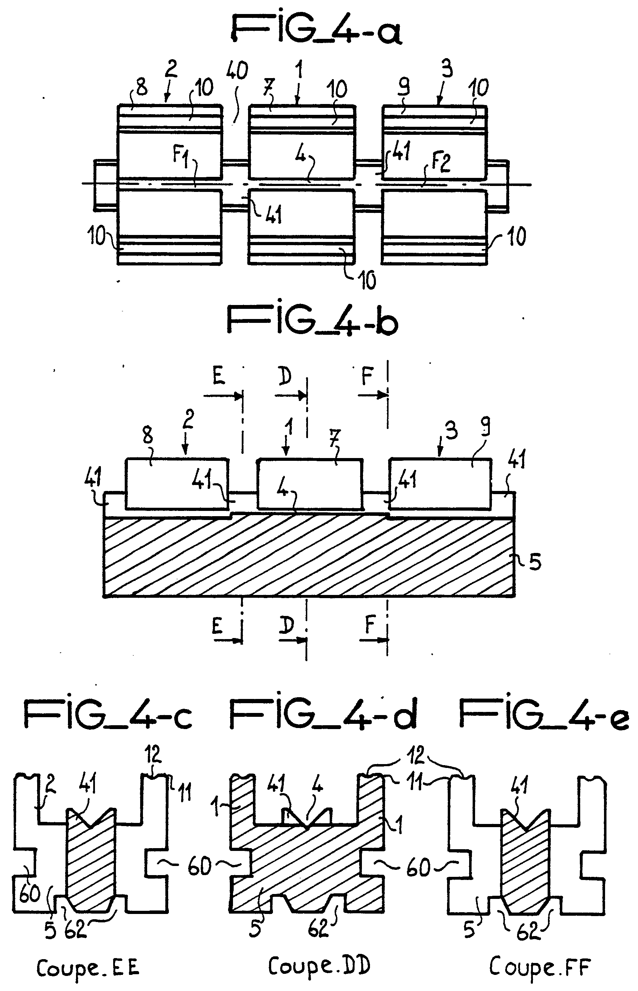

Selon les figures 1a et 1b, un support 5 présente une rainure en forme de V4 s'étendant sur toute la longueur de sa face supérieure. Cette rainure 4 traverse trois parties du support, successivement une partie d'extrémité 2, une partie centrale 1 et une seconde partie d'extrémité 3. A la partie centrale 1 est réalisé l'aboutement des deux fibres optiques grâce à la force de maintien exercée par une bride de maintien, ici une bride élastique 20. Les parties d'extrémités 2 et 3 sont destinées à maintenir en position les deux fibres optiques dans une région où elles ne sont pas dénudées, grâce à des brides de rétention 30. La bride élastique 20 et les brides de rétention 30 sont disposées dans des cavités respectivement 7', 8' et 9' dans lesquelles elles sont maintenues par des clips 50 dont la partie inférieure 51 est retenue dans l'une de deux rainures longitudinales 62 ménagées à la partie inférieure du corps de connecteur 5 (voir figure 4c à 4e). Chaque clip 50 est actionné à sa partie supérieure par une boucle 58 qui permet de déplacer deux épaulements 55 vers l'une ou l'autre de deux rainures 11 et 12 correspondant chacune à une position de serrage des brides. La rainure 11 correspond à une possibilité de coulissement de la fibre optique correspondante en dessous de la bride, alors que la rainure 12 correspond à un blocage en position de la fibre. D'autre part une rainure 10 est prévue sur les rebords latéraux 7, 8 et 9 des cavités 7', 8' et 9' de manière à recevoir le clip 50 en position de repos où il n'exerce aucun serrage sur les brides, mais où celles-ci peuvent être mise en place dans les cavités correspondantes.

On remarquera en se rapportant plus particulièrement aux figures 4a et 4b, que la rainure en V4 comporte en fait plusieurs parties d'inégale profondeur de manière à éviter d'avoir un rayon de courbure sur la fibre, à permettre le blocage des fibres non dénudées au niveau des brides de rétention ainsi que le maintien en position des fibres dont la gaine de protection mécanique a été enlevée, au niveau de la bride élastique 20. Sur les figures 1a et 1b, on voit également des ouvertures 40 disposées entre la partie 1 et les parties 2 et 3 et qui permettent de laisser passer les faces latérales des clips 50 lorsque ceux-ci sont actionnés dans leurs différentes positions.

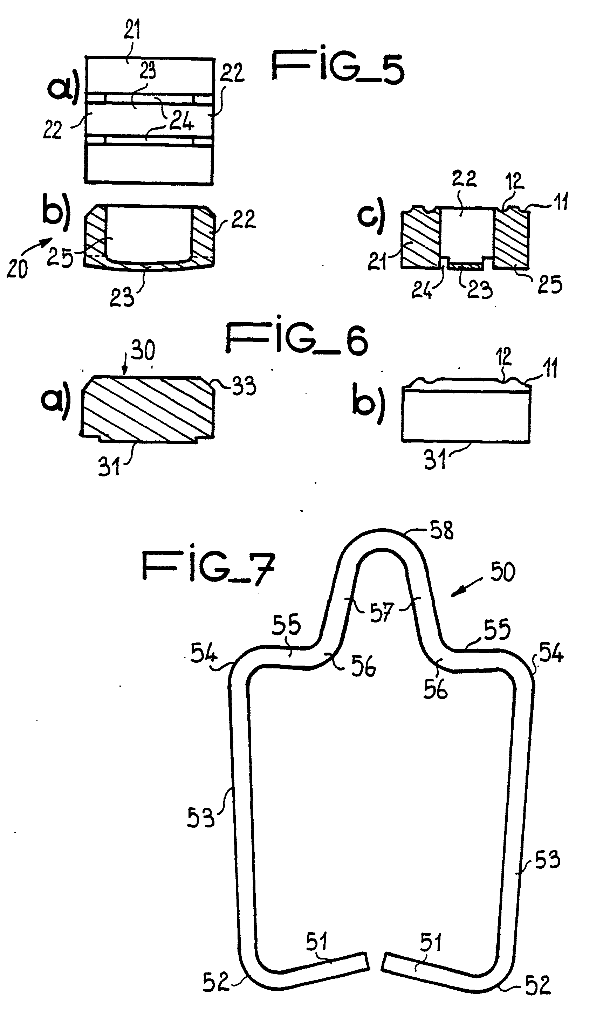

Selon les figures 5a à 5c, la bride élastique 20 comporte une membrane élastique 23 s'étendant longitudinalement entre deux parois transversales 22. Les parois transversales 22 sont reliées entre de chaque côté par des parois longitudinales 21 dont la partie inférieure 25 sert de butée lors du serrage de la bride dans la partie centrale 1. Comme on le voit à la figure 5c, la lame élastique 23 dépasse légèrement de la partie inférieure 25 des parois longitudinales 21, ce qui limite la course montante ou le battement de la lame 23 et par conséquent l'effort sur les fibres. Ceci permet de maintenir les fibres en position en bout à bout sans exercer sur celles-ci une force verticale trop importante qui serait susceptible de produire des atténuations indésirables du signal. De chaque côté de la lame 23 subsiste un espace 24 sur une partie de la longueur de la lame 23, cet espace 24 débouchant dans une cavité 25 bordée par les parois 21 et 22.

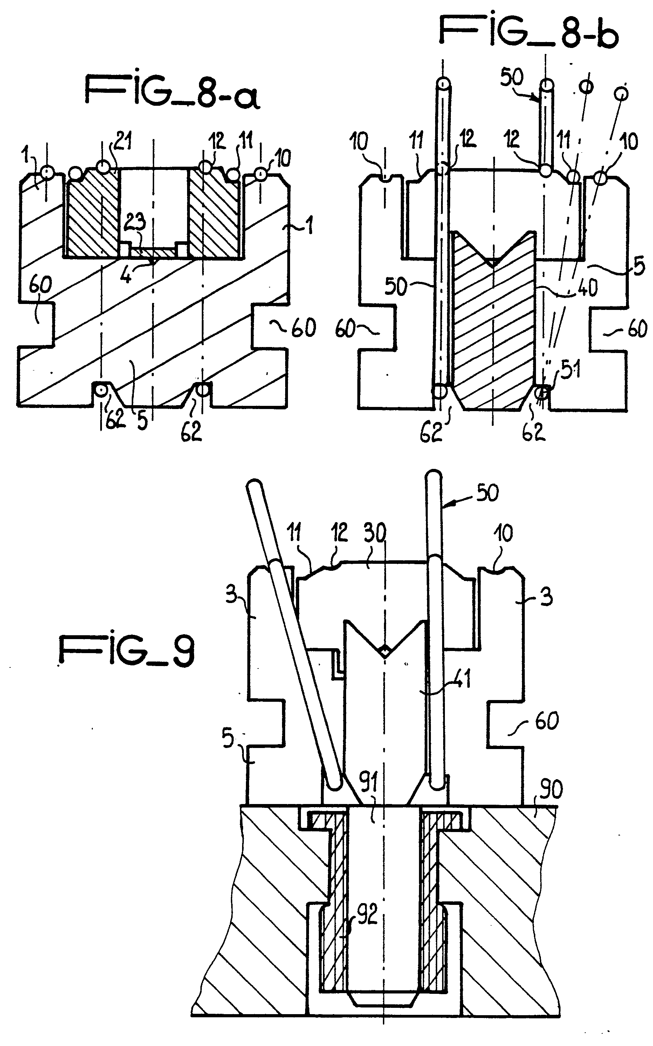

Selon les figures 6a et 6b, la bride de rétention 30 présente un fond plat 31, des chanfreins 33 sur ses faces latérales. On remarquera qu'une telle bride peut, en variante, être réalisée sous forme d'une bride élastique analogue à la bride 20.

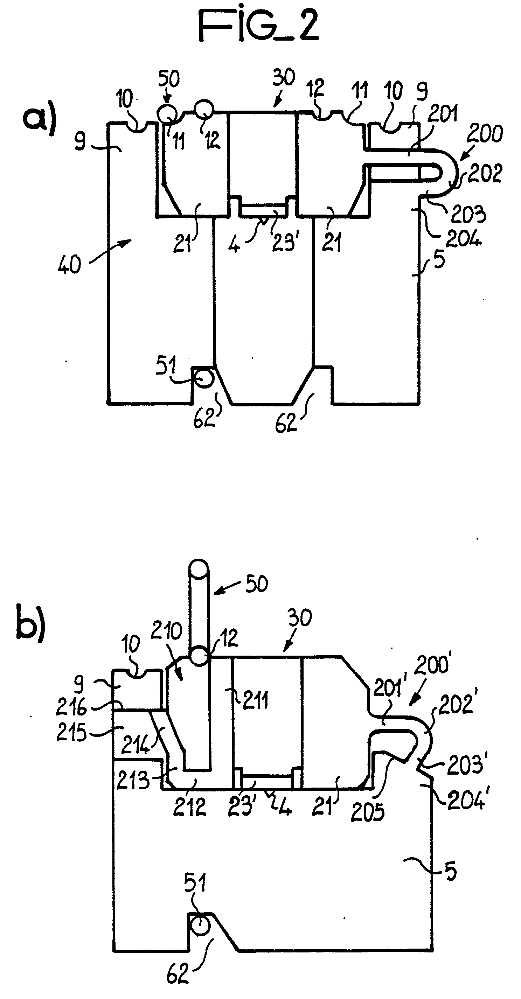

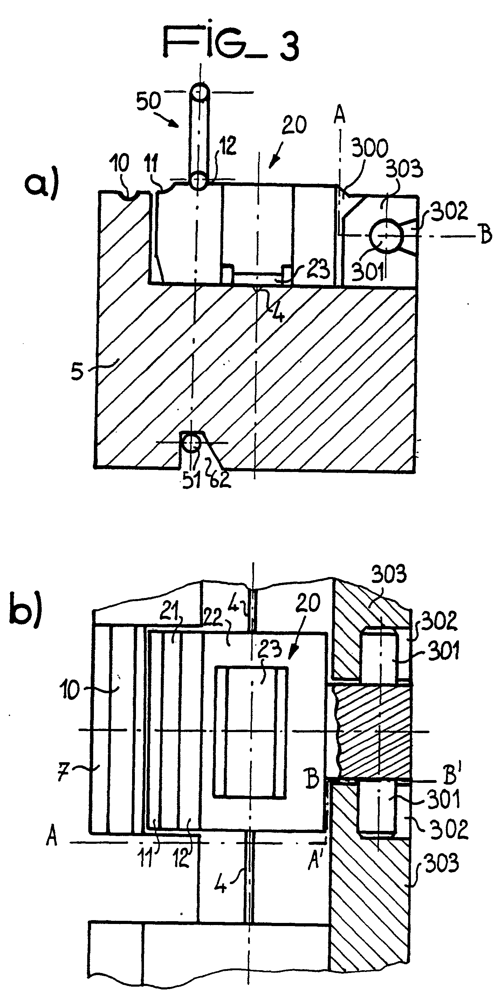

Selon les figures 2a, 2b, 3a et 3b, les brides peuvent être articulées sur le corps de connecteur 5.

Selon la figure 2a, une bride de rétention 30, qui peut être une bride plate, ou bien, comme représenté une bride élastique présentant une membrane élastique 23', est reliée à un rebord 204 du corps du connecteur 5 par une articulation souple 200 comportant une région 203 de raccord au corps 5, une zone de pliage 202 et une région de liaison avec la bride 30 proprement dite. Un passage 201 est ménagé dans le rebord 9 de manière à permettre le débattement de l'articulation souple 200, laquelle s'étend de préférence sur toute la longueur de la bride 30. Du côté opposé à l'articulation 200, la bride 30 est retenue par un clip 50, qui comme dans le cas des figures 1a et 1b peut être disposé selon deux positions de serrage de la bride 30, dans l'une ou l'autre de deux rainures 11 et 12. Un clip 50 peut éventuellement être utilisé du côté de l'articulation 200. Dans ce cas, et si on souhaite ménager une rainure 10 de repos du clip 50 dans support, la largeur du passage 201 est inférieure à la longueur de la bride 30.

Selon la figure 2b, le bord latéral 21 de la bride 30 est relié à un plat incliné 205 d'un rebord 204' du corps de connecteur 5 par l'intermédiaire d'une articulation souple 200' comprenant un passage 205, un replis 202' et une région de raccordement 203' au plat incliné 205. A l'extrémité opposée à l'articulation 200', le serrage de la bride 30 dans sa première position est assuré par une languette 214 venant se loger dans un bord supérieur 216 d'une ouverture 215 ménagée dans le bord 9. Une cavité 210 est ménagée dans le bord latéral 211 de la bride 30 opposée au bord latéral 21. Un prolongement 212 s'étend depuis l'extérieur de la bride 30 à partir de la partie inférieure du bord latéral 211. Le prolongement 212 se poursuit par un cour de 213 à 90° vers le haut, dont l'extrémité porte la languette 214 qui s'étend dans une direction inclinée vers l'extérieur de la bride 30 par rapport à la verticale. La longueur de la languette 214 et son élasticité est telle que, une fois engagée dans un bord supérieur 216, le prolongement 212 n'est pas plaqué sur le corps du connecteur 5 et transmet à la membrane 23' une force de serrage telle que le coulissement de la fibre dans la rainure 4 reste possible. La bride 30 ne comporte pas de rainure telle que 11, mais une rainure 12. Lorsqu'un clip 50 y est positionné, la bride 30 est en butée sur le corps de connecteur 5 et la membrane 23' remonte de sa course maximale correspondant au blocage de la fibre dans la rainure 4.

Selon les figures 3a et 3b, une bride de réalignement 20 (et/ou une bride de rétention) présente sur un bord latéral 21 un prolongement 300 portant un axe 301 qui en dépasse à chacune de ses extrémités. Celles-ci sont logées dans des rainures 302 en forme de « trou de serrure », qui les maintiennent tout en permettant leur rotation. Du côté opposé, la bride est serrée par un clip 50 soit coopérant avec deux rainures 11 et 12 comme représenté ou avec une seule rainure 12, la première position de serrage étant alors assurée par une languette telle que 214.

Selon la figure 7, un clip 50 comporte à sa partie supérieure une boucle 58 et deux bras de rétention 55 lesquels se prolongent vers le bas après un coude 54 par des bords latéraux 53 qui se terminent à la partie inférieure par un coude 52 qui porte les bras de rétention 51 légèrement cambrés vers le haut de manière à former un effet de ressort.

En liaison avec les figures 8a et 8b, et 1a, 1b on va maintenant donner un exemple de réalisation du montage des fibres dans le dispositif de connexion selon l'invention. Tout d'abord, on dénude avec une pince à cliver les extrémités des fibres optiques en leur enlevant leur gaine de protection mécanique sur une longueur donnée correspondant au minimum à un peu plus de la moitié de la longueur de la bride élastique. Le support est ouvert pour faciliter la mise en place des fibres. On pose ensuite une des fibres dans la rainure 4 pour que son extrémité clivée vienne se situer à peu près au milieu de la cavité 7'. On met alors en place du même côté une bride de rétention 30 en plaçant le clip 50 dans la rainure 12 (position de blocage) de manière à bloquer la première fibre $F_1$ en position. On positionne ensuite l'autre extrémité de fibre $F_2$ dans le V du support 5 au voisinage de la face clivée de la première fibre F. On pose ensuite la bride de réalignement puis la deuxième bride de rétention dans les cavités 7' et 9' et on place les clips 50 des deux brides dans les rainures 11 correspondantes. On fait ensuite coulisser la deuxième fibre $F_2$ dans la rainure 4 le long de la bride de rétention et de la bride de maintien jusqu'à ce qu'elle vienne en butée contre la première fibre $F_1$, elle-même bloquée en position par la première bride de rétention. On place alors les clips de la deuxième bride de rétention, puis de la bride de réalignement dans les rainures correspondantes 12 de manière à fixer en position la fibre $F_2$ précédemment mise bout à bout avec la fibre $F_1$.

Selon la figure 9, le support 5 porte à sa partie inférieure une pluralité de pions 91 destinés à être introduits de force dans des douilles 92 portées par une platine 90. La platine 90 est susceptible de porter plusieurs rangées de douilles 92 permettant la fixation sur celle-ci d'une pluralité de dispositifs de connexion suivant l'invention.

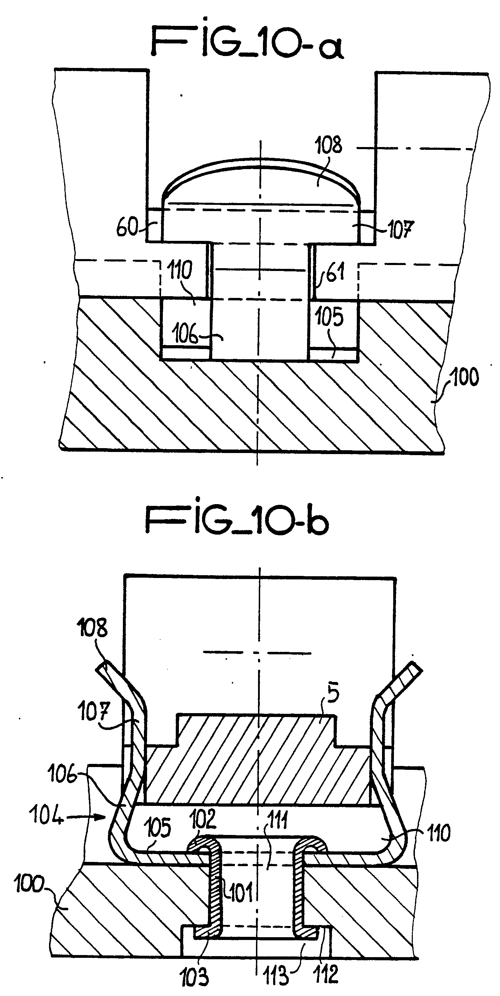

Suivant la variante représentée au figures 10a et 10b, une platine 100 porte des pattes de fixation 104 maintenues par des rivets 101 dans une platine 100. Les rivets 101 sont repliés en 103 sur des rebords 112 d'une ouverture 113. Le rivet 101 étant posé dans une ouverture 111, et replié en 102 autour d'une partie plate 105 des pattes 104. A partir de la partie horizontale 105, la patte 104 comporte une région repliée 106 qui vient se loger dans des fentes 61 jouxtant les rainures 60 ménagées dans le corps de connecteur 5. La fixation est obtenue par des pattes 107 plus larges que la rainure 61 et qui sont logées dans la rainure 60. La patte 107 se prolonge par un repli 108 dirigé vers l'extérieur et qui permet d'écarter la patte 107 de la rainure 60 lors du démontage du corps du connecteur 5.

A titre d'exemple non limitatif, on va donner des valeurs de forces de rétention mises en œuvre aussi bien pour les brides plates que pour les brides élastiques et pour de fibres comprises entre 100 et 1 000 μm de diamètre extérieur.

Pour une fibre non dénudée de diamètre nominal 125 μ, disposée dans une rainure 4 de profondeur 0,13 mm, et dépassant de ce fait de celle-ci d'une distance d égale à 0,02 mm, le coulissement de la fibre pourra être assuré à l'aide d'une bride plate de longueur de 30 à 100 fois le ∅ de la fibre, pour des forces d'appui verticales de l'ordre de 0,5 et 1,5 N. Si on met en œuvre une bride élastique, le blocage de la fibre sera obtenu par mise en butée de la face inférieure de la bride, ceci devant correspondre à une force d'appui de la fibre de l'ordre de 4 fois celle mentionnée ci-dessus.

L'invention ne se limite pas aux modes de réalisation décrits et représentés. Ainsi, chaque corps de connecteurs peut comporter une pluralité de rainures 4 destinées à recevoir chacune une paire de fibres optiques telles que $F_1$ et $F_2$. Dans ce cas, le procédé est mis en œuvre comme décrit ci-dessus à ceci près que les opérations sont réalisées simultanément sur l'ensemble des fibres situées de chaque côté. D'autre part, ainsi qu'on l'a vu dans le corps de la description, les brides de rétention peuvent être réalisées sous la forme de brides plates ou de brides élastiques.

## Revendications

1. Dispositif de connexion semi-permanent destiné à raccorder bout à bout deux n fibres optiques, avec n entier, supérieur ou égal à 1, et comportant un support (5) présentant un rainurage (4) en forme de V destiné à recevoir les extrémités desdites fibres optiques et formé de trois parties, à savoir une partie centrale (1) recevant une bride d'alignement (20) pour maintenir élastiquement les extrémités des fibres dénudées et accolées bout à bout, et deux parties d'extrémité (2, 3) recevant chacune une bride de rétention (30), destiné à maintenir en position les fibres dans une région où elles ne sont pas dénudées ; des moyens de serrage (50) étant prévus pour la bride d'alignement (20) et au moins une bride de rétention (30), deux positions de serrage, la première permettant le coulissement d'au moins une fibre optique le long du rainurage (4) en forme de V et la seconde assurant son blocage en position caractérisé en ce que lesdits moyens de serrage comprenant des clips (50) dont une extrémité (51) est logée dans une partie dudit support (5) opposée à celle présentant ledit rainurage (4) et dont l'extrémité opposée (55 à 58) est susceptible de venir se loger dans l'une des deux rainures ménagées (11, 12) sur un côté d'une dite bride (20 ou 30), opposé à celui adjacent audit rainurage (4) et correspondant respectivement à chacune des deux dites positions.

2. Dispositif selon la revendication 1, caractérisé en ce que lesdits moyens de serrage (50), présentent en outre une position de repos dans laquelle ils sont maintenus en place sur le support.

3. Dispositif selon une des revendications 1 ou 2, caractérisé en ce qu'au moins une bride (20, 30) est articulée latéralement sur le support et comporte au moins un clip (50) situé à l'opposé de ladite articulation.

4. Dispositif selon une des revendication 1 et 2, caractérisé en ce qu'au moins une bride (20, 30) est articulée latéralement sur le support autour d'un axe souple et comporte au moins un clip (50).

5. Dispositif selon l'une des revendications précédentes, caractérisé en ce que les trois parties (1, 2, 3) du support (5) sont séparées par des rainures (40) destinées à laisser libre passage aux branches latérales (53) des clips (50).

6. Dispositif selon la revendication 3, caractérisé en ce que les moyens de serrage comportent une seule et unique rainure (12) ménagée sur la bride correspondante servant à ladite seconde position de serrage, l'autre rainure (11) correspondante à ladite première position de serrage étant remplacée par une languette (214) solidaire de la bride et susceptible de verrouiller celle-ci dans le support.

7. Dispositif selon une des revendications précédentes, caractérisé en ce qu'au moins une bride (20, 30) est disposée dans un logement (7', 8', 9') du corps de connecteur (5).

8. Dispositif selon une des revendications précédentes, caractérisé en ce qu'au moins une bride (20, 30) est élastique et comporte dans sa partie centrale et sur une longueur donnée (1), une membrane élastique déformable (23) disposée longitudinalement par rapport aux fibres optiques.

**Claims**

1. Semi-permanent connection device for end-to-end connection of two n optical fibers, n being an integer, higher than or equal to 1, comprising a support (5) having a V-shaped groove (4) adapted to receive the ends of said optical fibers and being formed in three parts, namely a central part (1) receiving a realignment clamp (20) for elastically maintaining the ends of the stripped fibers placed end to end, and two end parts (2, 3) each one receiving a retaining clamp (30), adapted to maintain the fibers in position in a zone where they are not stripped ; clamping means (50) being provided for the realignment clamps (20) and at least one retaining clamp (30), two clamping positions, the first one permitting the sliding of at least one optical fiber along the V-shaped channel (4) and the second ensuring the locking in position of said fiber, characterized in that said clamping means comprise clips (50) of which one end (51) is housed in one part of said support (5) opposite that provided with said groove (4) and of which the opposite end (55 to 58) is adapted to engage one of two slots (11, 12) provided on one side of one said clamp (20 or 30), opposite that adjacent to said groove (4) and corresponding respectively to each of said two positions.

2. Device according to claim 1, characterized in that said clamping means (50) further present a rest position in which they are held in position on the support.

3. Device according to one of claims 1 or 2, characterized in that at least one clamp (20, 30) is laterally articulated on the support and comprises at least one clip (50) situated opposite said articulation.

4. Device according to one of claims 1 and 2, characterized in that at least one clamp (20, 30) is laterally articulated on the support about a flexible axis and comprises at least one clip (50).

5. Device according to one of the preceding claims, characterized in that the three parts (1, 2, 3) of the support (5) are separated by apertures (40) designed to allow free passage to the lateral parts (53) of the clips (50).

6. Device according to claim 3, characterized in that the clamping means comprise only one slots (12) provided on the corresponding clamp used in the second clamping position, the other slots (11) corresponding to said first clamping position being replaced by a tongue (214) fast with the clamp and adapted to lock same inside the support.

7. Device according to one of the preceding claims, characterized in that at least one clamp (20, 30) is placed inside a recess (7', 8', 9') of the connector body (5).

8. Device according to one of the preceding claims, characterized in that at least one clamp (20, 30) is elastic and comprises in its central part and over a given length (1), a deformable elastic membrane (23) placed longitudinally with respect to the optical fibers.

**Patentansprüche**

1. Halbpermanente Verbindungsvorrichtung für die « Ende an Ende »-Befestigung von zwei aus n optischen Fasern, wobei n eine ganze Zahl grösser oder gleich 1 ist, und wobei die Vorrichtung folgendes aufweist : einen Träger (5), der eine V-förmige Rille (4) für die Aufnahme der Enden der genannten optischen Fasern aufweist, und der aus drei Teilen gebildet ist, und zwar einem Mittelteil (1) der einen Ausrichtbügel (20), zum elastischen Halten, und zur « Ende an Ende »-Befestigung der Enden der freigelegten Fasern, aufnimmt, und zwei Endteilen (2, 3), von denen jeder einen Haltebügel (30) zum Festhalten der Fasern in einem Teil, wo diese nicht freigelegt sind, aufnimmt ; Festlegmittel (50) vorgesehen für den Ausrichtbügel (20) und mindestens einen der Haltebügel (30), wobei zwei Festlegpositionen vorgesehen sind, von denen die erste das Gleiten von mindestens einer optischen Faser entlang der V-förmigen Rille (4) ermöglicht, und die zweite den Festsitz sicherstellt, dadurch gekennzeichnet, dass die Festlegmittel Clips (50) aufweisen, deren eines Ende (51) in einem Teil des genannten Trägers (5) angeordnet ist, der dem die Rille (4) aufweisenden Teil gegenüberliegt, und deren gegenüberliegendes Ende (55 bis 58) in der Lage ist, sich in eine der Nuten (11, 12) jeweils einer der zwei genannten Positionen entsprechend zu legen, wobei die Nuten (11, 12) auf der Seite der genannten Bügel (20 oder 30) angeordnet sind, die gegenüber der benachbart zur Nut (4) liegenden Seite liegt.

2. Vorrichtung nach Anspruch 1, dadurch gekennzeichnet, dass die Festlegmittel (50) weiterhin eine Ruheposition aufweisen in der sie am Träger an ihrem Platz gehalten werden.

3. Vorrichtung nach einem der Ansprüche 1 oder 2, dadurch gekennzeichnet, dass mindestens ein Bügel (20, 30) gelenkig seitlich am Träger angeordnet ist und mindestens ein Clip (50) entgegengesetzt zu der Gelenkverbindung aufweist.

4. Vorrichtung nach einem der Ansprüche 1 und 2, dadurch gekennzeichnet, dass mindestens ein Bügel (20, 30) gelenkig seitlich um eine biegsame Achse angeordnet ist und mindestens ein Clip (50) aufweist.

5. Vorrichtung nach einem der vorhergehenden Ansprüche, dadurch gekennzeichnet, dass die drei Teile (1, 2, 3) des Trägers (5) durch Öffnungen (40) getrennt sind, um einen Durchgang für die seitlichen Zweige (53) der Clips (50) freizulassen.

6. Vorrichtung nach Anspruch 3, dadurch gekennzeichnet, dass die Festlegmittel folgendes aufweisen : eine einzige und einzigartige Nut (12) die auf dem entsprechenden Bügel ausgebildet ist und als die zweite Festlegposition dient, wobei die weitere der genannten ersten Festlegposition entsprechende Nut (11) durch eine Zunge (214) einstückig mit dem Bügels ersetzt ist, und in der Lage ist, diesen auf dem Träger zu verriegeln.

7. Vorrichtung nach einem der vorhergehenden Ansprüche, dadurch gekennzeichnet, dass mindestens ein Bügel (20, 30) in einem Sitz (7', 8', 9') des Körpers des Trägers angeordnet ist.

8. Vorrichtung nach einem der vorhergehenden Ansprüche, dadurch gekennzeichnet, dass mindestens ein Bügel (20, 30) elastisch ist und in seinem Mittelteil und über einer gegebene Länge (1) eine elastisch deformierbare Membran (23) aufweist, die in Längsrichtung in bezug auf die optischen Fasern angeordnet ist.

# FiG_1-a

# FiG_1-b

# FIG_2

a)

b)

# FIG_3

a)

b)

# FIG_4-a

# FIG_4-b

# FIG_4-c  FIG_4-d  FIG_4-e

Coupe.EE          Coupe.DD          Coupe.FF

FIG_5

a) 21 23 22 22 24

b) 20 25 22 23

c) 22 12 11 21 24 23 25

FIG_6

a) 30 33 31

b) 12 11 31

FIG_7

50 58 57 55 56 55 56 54 54 53 53 51 51 52 52

EP 0 146 471 B1

FIG_8-a

FIG_8-b

FIG_9

6

# FIG_10-a

# FIG_10-b